(19) Europäisches Patentamt
European Patent Office
Office européen des brevets

(11) **EP 2 670 054 B1**

(12) **EUROPEAN PATENT SPECIFICATION**

(45) Date of publication and mention of the grant of the patent:
**14.06.2017 Bulletin 2017/24**

(51) Int Cl.:
**H04B 1/38** (2015.01)

(21) Application number: **12170354.0**

(22) Date of filing: **31.05.2012**

(54) **Electromagnetic field-aware uplink power pontrol**

Elektromagnetisches Feld-bewusste Uplink-Leistungskontrolle

Commande de puissance de liaison montante sensible au champ électromagnétique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.12.2013 Bulletin 2013/49**

(73) Proprietor: **FUJITSU LIMITED**
**Kawasaki-shi,**
**Kanagawa 211-8588 (JP)**

(72) Inventors:
• **Tesanovic, Milos**
**Hayes, Middlesex UB4 8FE (GB)**

• **Wilson, Mick**
**Romsey, Hampshire SO51 5RW (GB)**

(74) Representative: **Stebbing, Timothy Charles**
**Haseltine Lake LLP**
**Lincoln House, 5th Floor**
**300 High Holborn**
**London WC1V 7JH (GB)**

(56) References cited:
| | |
|---|---|
| **EP-A1- 1 248 379** | **EP-A1- 2 410 661** |
| **EP-A2- 0 843 421** | **WO-A1-2012/067563** |
| **WO-A2-2012/066562** | **GB-A- 2 380 359** |

## Description

Field of the Invention

The present invention relates to wireless communication networks, and more particularly to controlling electromagnetic field (EMF) exposure of users of such systems. The present invention may be applied to various kinds of wireless communication network including cellular networks based on the 3GPP families of standards, such as WCDMA and LTE/LTE-Advanced.

Background of the Invention

The Internet of Things (IoT) will see the connection of tens of billions of objects to the Internet over the next 10 years and will lead to improvements in the quality of life for everyone. The density of all the radio connected IoT objects will, however, place increasing pressure on the available limited spectrum resources, and potentially increase the electromagnetic field (EMF) levels.

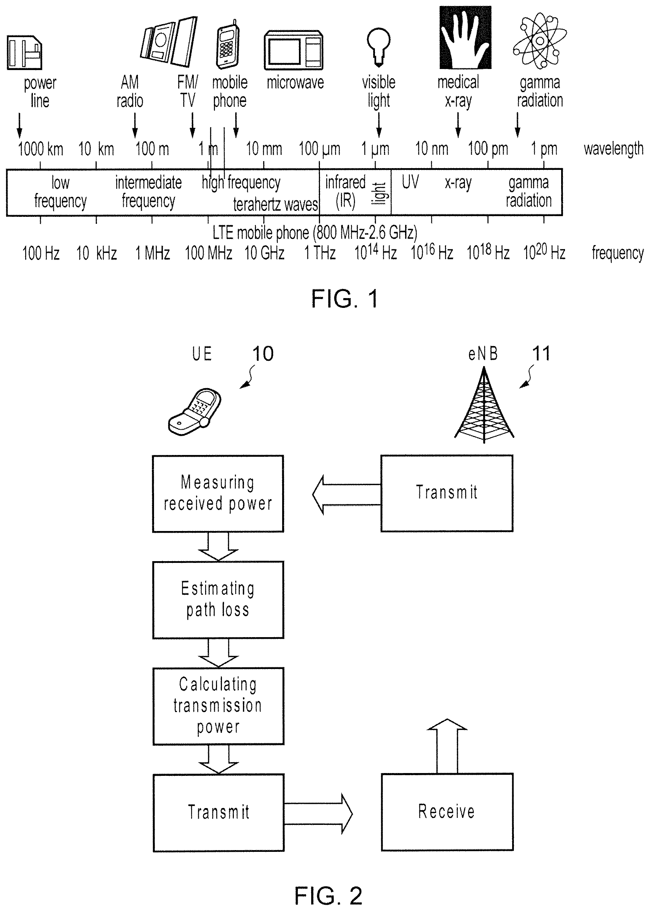

Figure 1 shows an electromagnetic spectrum with low-frequency radio waves at one end and gamma rays at the other. Frequencies in use by wireless communication systems have trended higher along with the requirement for increased data rates, and in the case of LTE, frequency bands anywhere between about 800 MHz and 2.6 GHz are usually employed, but may range as high as 3.5GHz or more.

A recent statement from the International Agency for Research on Cancer (IARC) has strengthened the existing concern among the general public about the long-term effects of ubiquitous radio waves: "IARC has classified radiofrequency electromagnetic fields as possibly carcinogenic to humans (Group 2B), a category used when a causal association is considered credible, but when chance, bias or confounding cannot be ruled out with reasonable confidence."

EMF radio exposure of a user of a mobile terminal depends, among other factors, on the transmission power currently used by the terminal to communicate with its base station, in other words on the uplink (UL; the reverse direction is the downlink or DL).

Uplink power control is the process of adjusting the terminal's transmission power in order to maintain good communication with the base station. Various forms of uplink power control are possible including open-loop and closed-loop power control.

Briefly, open-loop power control as illustrated in Figure 2 involves the terminal (UE) 10 deciding for itself what uplink power setting to use, based on measuring the DL signal strength (usually based on a reference signal transmitted from the base station (eNB) 11), and inferring from this the likely path loss on the uplink.

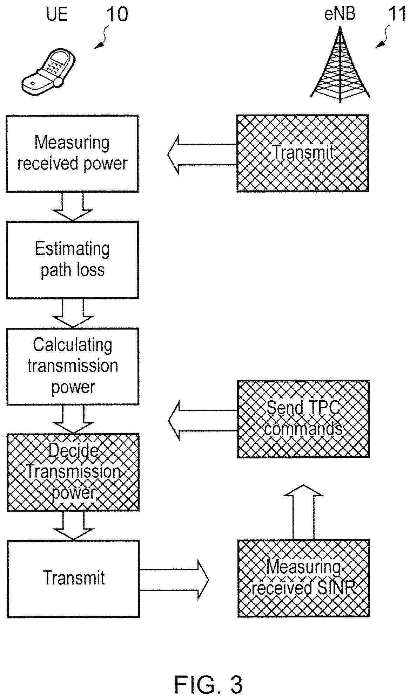

Closed-loop power control, illustrated in Figure 3, involves the terminal (UE) 10 feeding back measurements to the base station (eNB) 11, which decides the appropriate power setting for the terminal and instructs the terminal to adjust its power if necessary, by transmitting a transmit power control (TPC) command.

The concept of "bearers" is important for achieving quality-of-service (QoS) in a 3GPP-based network. In general, a "bearer" can be thought of as an information transmission path of defined capacity, delay and bit error rate, etc. so as to enable a given service to be provided to the user. Multiple bearers may be in operation simultaneously between a given terminal and the network.

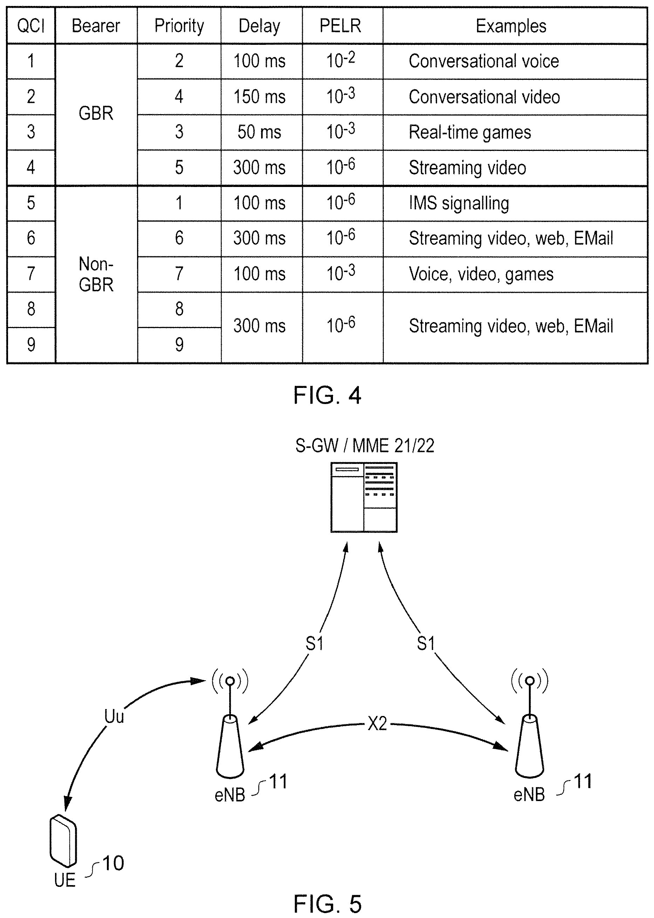

In LTE for example, each bearer has various QoS parameters as shown in Figure 4. These include:

- a QoS class identifier indicating the error rate and delay permitted for the service;
- a Priority which is used to decide whether the bearer should be dropped in case of network congestion
- in the case of so-called GBR bearers, a Guaranteed Bit Rate (GBR), in other words a long-term bit rate which the user should expect to receive
- a Delay figure, which is the maximum delay expected to be experienced for each packet in the transmission
- a Packet Error Loss Rate (PELR), indicating the proportion of packets allowed to be lost.

The basic system architecture in LTE is illustrated in Figure 5. As can be seen, each UE 10 connects over a wireless link via a Uu interface to an eNB 11, which defines one or a number of cells for wireless communication. Each eNB 11 in turn is connected by a (usually) wired link using an interface called S1 to higher-level or "core network" entities, including a Serving Gateway (S-GW 22) responsible for packet forwarding of user data on the downlink to the UE 10 and on the uplink. The S-GW 22 provides a "mobility anchor" for the user plane during handovers of a UE 10 from one eNB 11 to another. It also manages and stores UE "contexts" which are the details of active connections with UEs including the above-mentioned bearers. There is also a Mobility Management Entity (MME 21) (possibly combined with the S-GW as shown), for managing the system and sending control signalling to other nodes, particularly eNBs, in the network. As shown in Fig. 5, the eNBs 11 communicate among themselves by a wired or wireless link, using an interface called X2, for mutual co-ordination for example when handing over a UE 10 from one cell to another.

From the above, it is evident that there is a clear need for new network topologies and network management (ideally applicable-but not confined to-LTE) which reduce the EMF levels experienced by a user, but which at the same time do not compromise the user's Quality of Service (QoS).

EP 2 410 661 A1 describes a radiation power level control scheme for a wireless user equipment. A radiation exposure evaluation is based on estimations of Specific Absorption Rate (SAR) which measures tissue heating of a user due to radiation exposure from a device. Transmit power levels are controlled based on a tracked radiation history stored in a database which is used to derive one or more SAR values during a current transmission event. In particular, transmit power is reduced if one of a plurality of SAR thresholds is exceeded. The SAR thresholds are set up depending on transmission types and usage modes (which take into account a coarse approximation of proximity of the device to a user).

Summary of the Invention

According to a first aspect of the present invention, there is provided a wireless communication method in which a terminal conducts wireless communication having a quality of service, QoS, with a network, the method comprising steps of:

> generating an indication related to EMF exposure of a user of the terminal; and
> controlling uplink power of the terminal on the basis of the QoS and said indication wherein the controlling comprises optimising a cost function which combines at least QoS, an indication of the proximity of the terminal with respect to the user, and 10 the uplink power of the terminal.

In one embodiment, the indication is generated by the terminal and transmitted to the network, and the uplink power control is performed on the network side.

In a further embodiment, the indication is generated by the network. That is, the network may be able estimate the EMF exposure of the user based on information from other terminals such as their location, transmit power and EMF levels if available.

In any case, the indication preferably includes an indication of any one or more of:

> proximity of the terminal with respect to the user;
> proximity of other terminals with respect to the user;
> an EMF reading sensed directly;
> a time period related to EMF exposure;
> a user setting related to EMF exposure; and
> uplink power currently used by the terminal.

From the above it will be apparent that the "indication related to EMF exposure" need not signify EMF directly; rather, it may for example be an indication of user proximity to the terminal which, when combined with the terminal uplink power, allows the EMF exposure to be inferred.

The above-mentioned proximity of the terminal with respect to the user can be determined in various ways. It may be based on at least one of:

> height, orientation or acceleration of the terminal;
> temperature of the terminal;
> height of the terminal;
> software applications in use at the terminal;
> status of ancillary units of the terminal such as mi-
> crophone port, earphone port, camera, charger or Bluetooth; and
> analysis of images captured by an imaging device of the terminal.

The final item in the above list may involve, for example, taking snapshots with a camera periodically and using software to assess their contents.

Controlling the uplink power preferably takes into account not only the current conditions, but also the effect of changing the uplink power on at least one of:

> EMF exposure of the user;
> QoS provided to the terminal by the network;
> power consumption of the terminal; and
> EMF exposures of users of other terminals.

The controlling step may further take into account a user profile, which could be either stored in the terminal or stored in the network. Such a user profile can indicate the importance placed by the user on reducing his or her EMF exposure.

Whilst the method of the invention may in many cases be used to reduce uplink power so as to limit EMF exposure, the controlling step may alternatively increase the uplink power in order to raise the QoS, if this is not constrained by the effect on EMF exposure of the user and/or the interference caused to other users. This would be the case, for example, when the terminal is positioned relatively far away from the user.

Reducing the uplink power employed in the terminal may make it more difficult to communicate reliably with the network, given the presence of other users in the network causing interference. Therefore, in one embodiment, the method further comprises the network allocating uplink resources to the terminal by taking into account the uplink power determined in the controlling step, wherein if the uplink power of the terminal is constrained by EMF exposure, uplink resources subject to less interference are allocated to the terminal.

Here, preferably, the allocating step further takes into account interference to other users, expected to be caused by allocating resources to the user. This is especially important for systems such as W-CDMA in which UL transmissions of different users are not mutually orthogonal.

According to a second aspect of the present invention, there is provided a wireless communication system for providing wireless communication having a quality of service, QoS, the system comprising:

> a terminal arranged to transmit an indication related to EMF exposure of the user of the terminal; and
> a base station arranged to receive said indication related to EMF exposure and control uplink power of the terminal on the basis of the QoS and said indication, wherein said base station optimises a cost function which combines at least QoS, an indication of proximity of the terminal with respect to the user, and uplink power of the terminal.

In order to allow the network to know which terminals are capable of having a role in a method of the invention, the terminals preferably also include means for signalling to the network the terminal's capability of providing an indication related to EMF exposure of the user.

Thus, embodiments of the present invention may provide a way of allocating radio resources to a mobile terminal, based on the estimated EMF levels this allocation incurs, its estimated impact on the user (i.e. the change in user EMF exposure), and the resulting QoS. An algorithm is proposed which a) uses EMF as one of the metrics for transmit power control; and b) estimates the impact of those EMF levels on the user (in other words, proposes models for EMF exposure). The former is carried out by trading off terminal battery life against QoS while reducing the user EMF exposure when deciding on the UL transmit power levels, while the latter is based on estimates of terminal proximity to the user, terminal location, as well as user preference in the form of a 'User Profile'.

Brief Description of the Drawings

Figure 1 shows an electromagnetic spectrum including frequencies used in a wireless communication system;

Figure 2 illustrates open-loop power control In a wireless communication system;

Figure 2 illustrates closed-loop power control In a wireless communication system;

Figure 4 is a table of QoS classes defined in LTE;

Figure 5 illustrates a basic network topology in LTE;

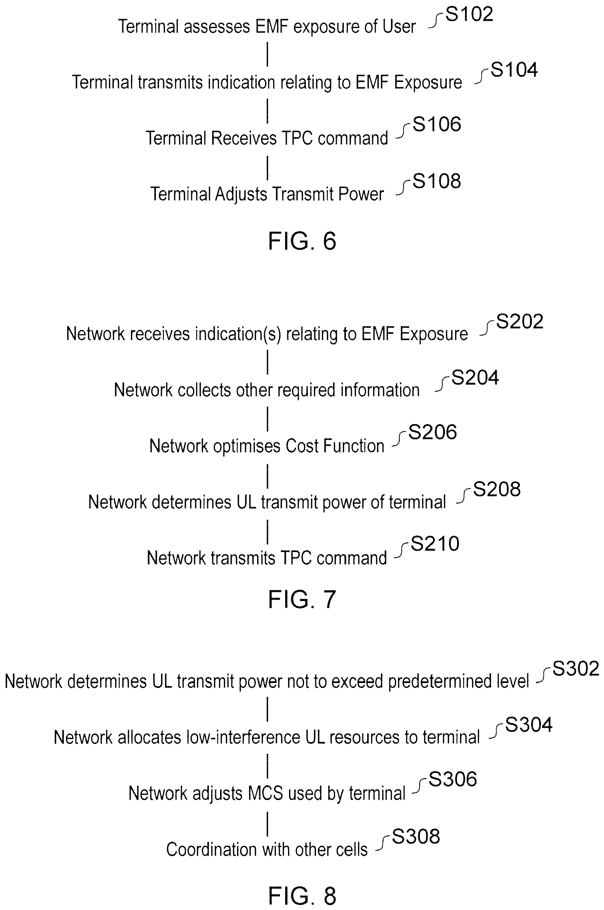

Figure 6 is a flowchart of steps in an embodiment as performed at a terminal;

Figure 7 is a flowchart of steps in an embodiment as performed on the network side, for example at a base station; and

Figure 8 is a flowchart of steps in a further embodiment as performed on the network side.

Detailed Description

This invention focuses on enhancing power control on the uplink (UL) in a wireless communication system. The mobile terminals (UE in LTE parlance) are typically multifunction devices which may be held or placed in many different positions with respect to the user; the terminals are no longer either idle, or pressed against the user's ear as was the case with earlier generations of mobile telephones. The key observation is that the same terminal transmit power on the UL will result in very different user EMF exposure levels, depending on the location of the terminal with respect to the user. Rather than basing the UL power control on received DL signal strength with no regard for the user EMF exposure (as is commonly done in existing cellular systems), or on simple terminal-to-body proximity decisions with a binary outcome, the inventors of the present invention have realised that a more sophisticated trade-off between UL power levels and resulting QoS is possible.

The UL transmit power control in both WCDMA and LTE is only concerned with achieving the required QoS (while keeping in mind the interference and terminal battery life requirements). This means that opportunities may arise when it would in fact be possible to increase the UL transmit power, thereby resulting in an increased QoS, while maintaining (or even reducing) the EMF exposure, if the system knew the terminal location with respect to the user. This is of especial significance for LTE, where the UL transmissions of respective users are orthogonal and an increase in transmit power will not cause any major interference to other users' UL transmission, but it will increase the QoS for the user in question. (On the other hand, it will potentially shorten the terminal battery life.)

The effectiveness of the proposed QoS increase is augmented by the known location of the terminal and its proximity to user's body; some techniques for inferring this are also part of this invention. Conversely, it is also possible to trade off QoS against EMF, by selecting a lower transmit power in instances when the EMF exposure is increased, thereby reducing the QoS. It is possible to actively involve users in this decision by defining EMF User Profiles.

The above principle may be applied either principally at the terminal, or principally at the network side (typically at the base station which serves the terminal), or by a combination of the terminal and network.

Taking this third possibility as an example, the steps of the process will be outlined for each of the terminal and the network respectively, on the assumption that the terminal provides some form of EMF-related information to the network, and the network determines the UL power. This is a similar principle to the closed-loop power control illustrated in Figure 3.

Figure 6 illustrates actions taken by the terminal in the above scenario.

Firstly (S102) the terminal makes some form of assessment related to the EMF exposure of the user. As explained in more detail below, this may involve deriving a value quantifying the user's EMF exposure (either measured, or estimated), or may alternatively involve an indirect indication such as the user's proximity to the terminal, or a set of indirect indications. The indication(s) may relate to instantaneous EMF exposure or alternatively to cumulative exposure over a defined time period.

The above step may be triggered periodically, or triggered by the terminal in response to the detecting some change in conditions, or may be triggered by receiving a request from the network.

Next (S104) the terminal transmits its findings to the network. Incidentally, references to "the network" in Figures 6 and 7 will typically mean, primarily, the base station serving the terminal. However, at least some of the steps performed at the network side may involve a higher-level entity in the network, such as the MME 22 of Figure 5.

Following processing at the network side (in this example - see below) the terminal receives (S106) from the network a TPC command, instructing the terminal to adjust its transmit power. For example the terminal may be instructed to reduce its transmit power as a result of the network receiving an indication that the user's EMF exposure has increased.

The terminal then adjusts its transmit power accordingly (S108) and performs UL transmission in accordance with the newly-set power level, until this is again changed for any reason, including but not restricted to a repetition of the above process.

Meanwhile, on the network side the process may begin with the network receiving some indication(s) relating to EMF exposure of the user of a terminal (Figure 7, step S202). Of course, if the process of Fig. 6 was triggered by a request from the network, that request would form a prior step to S202.

Typically, the network will receive an indication from the terminal of the user concerned. However, this is not the only possible kind of indication. The network might receive indications from other terminals which have relevance for the EMF exposure of the user. It is even possible for the network to make an assessment of the user's EMF exposure solely based on such other terminals' indications, without receiving any report from the user's terminal itself. An example of this would be if the user's terminal lacks any suitable means for assessing the user's EMF exposure or proximity to the terminal, whilst other nearby terminals do possess such information.

In step S204, the network collects any other information required. This step may not be needed if, for example, a direct EMF reading (possibly from a dosimeter) is received from the terminal. Assuming however that the indication received from the terminal relates to the user's proximity, the network may need to combine this information with the current transmit power in use at the terminal. Other relevant information includes the QoS level of the or each service being provided to the user.

Also relevant is the power consumption due to UL transmissions, relative to the available power. For example, power consumption may be compared with a remaining battery capacity of the terminal (indicated e.g. by the voltage being supplied) in order to assess the effect on usage time available before needing a charge.

It can normally be assumed that the network will already know at least some of the above pieces of information but if required, they may be included as part of the indication sent from the terminal, or signalled separately.

Next (S206), in this embodiment the above factors are combined in a cost function (see below). Optimising the cost function allows an appropriate value of the terminal's transmit power to be determined. Comparing this value with the current transmit power may lead in turn (S208) to a decision that the terminal's transmit power should be varied, either to reduce the power for the purpose of limiting the user's exposure, or conversely to raise the transmit power to permit a higher QoS, as explained below.

The network then transmits to the terminal if necessary (S210) at TPC command for varying the transmit power. This will typically be in the form of an instruction to lower or raise the power by a predetermined step, but alternatively could include an absolute value.

To estimate the EMF exposure of the user, in embodiments of the present invention any of the following may be used:

(a) Proximity of mobile to the body of user

- This information is normally not known at the eNB side and would have to be estimated and sent by the UE.
- By way of example, there are the following ways of obtaining this information:

  temperature sensors (detecting warmth and possibly proximity to the body);
  use of phone camera;
  height sensors (to determine which part of the body the terminal is close to);
  whether Bluetooth is on or off (if it is on and there is a voice call in progress then the user is very likely to be further away from the terminal);
  whether the phone is plugged in (charging);
  whether an earphone port or "speakerphone" function is in use (implying hands-free operation);
  audio level at an integrated microphone of the terminal;
  the application currently running (e.g. SatNav; gaming; user writing a text);
  or a combination of all these and additional methods.

As an example of estimating proximity, if the user is running a streaming video service then it is very likely that the mobile terminal is positioned at a distance from the user's body, or at least is being held at a distance away from the user's head. It should be noted that one situation of concern for EMF exposure is when the terminal is pressed against the user's head, as when making a normal voice call.

As an example of use of a phone camera, this may involve taking snapshots at random intervals-with prior consent from the user-and analysing their contents and/or the camera settings. An autofocus reading from the camera would indicate the distance to the nearest object. More sophisticated analysis using software could detect the user's face or body within the snapshots. Alternatively, a video camera function would be capable of tracking the position of the user continuously.

Whilst some of the above considerations may be regarded as uncertain or imprecise, taking multiple such factors into account should allow a rough estimate of EMF exposure to be determined sufficient for the purposes of the present invention (bearing in mind that the method can be repeated as often as desired).

(b) Proximity of other mobile terminals

- The location of other UEs within a single network (such as LTE) will be known to the eNB but not with great precision.
- Location of wireless devices on other networks would not normally be available to the eNB.
- UE measurements can help make both of these potential inputs more accurate.

(c) Dosimeter readings

- Future mobile terminals may include, or be linked to, a detector for directly detecting a user's EMF exposure. For example a dosimeter could be attached to the user with a short-range (e.g. Bluetooth) connection to the terminal itself.

As an example of how these parameters could be used for transmit power control which takes into account user EMF exposure, let QoS denote either an overall measure (across all the bearers set up between the terminal and the network) or an individual bearer QoS value, and with higher values representing better QoS, EMF an objective measure of EMF levels (based on the UL transmit power, and possibly taking into account dosimeter readings, if available), and $\theta$ the proximity of terminal to user (on a normalised scale, with higher values corresponding to greater proximity and hence higher impact on the user). The modified cost-function to be optimised using transmit power control algorithms we propose could then be (in one of the embodiments):

$$\frac{QoS}{\theta^m \cdot EMF^n}$$

where m and n are positive numbers (in one of the embodiments the EMF exposure is inversely squared to the distance between the user and the terminal; this could be achieved by setting m=2). This would result in more reliable EMF levels (rather than using UL transmit power as a measure) and/or a more accurate picture of the effect of said EMF levels on the users of mobile phones and other wireless devices.

Not all the terminals in the network will have the capability of informing the network of user proximity; therefore, informing the network of this capability (together with its "state", or parameter value, format of which will depend on the proximity indicator in use from the list above) is claimed in this invention.

A more complex embodiment is based on a cost function that would take into account not only the individual EMF levels and the impact of EMF on individual users, but rather overall/average EMF levels. For example, the transmit power control for a single UE could be performed by additionally taking into account any potential rise in EMF levels that other users will experience. For WCDMA, these algorithms which take into account EMF exposure when scheduling multiple users simultaneously would also need to ensure the co-channel interference incurred does not increase beyond a certain threshold.

In a further embodiment outlined in Figure 8, it is assumed that a procedure such as that of Figure 7 has been completed, with the result that the network determines (S302) that the terminal needs to maintain its UL transmit power at or below a predetermined level. The network then (S304) changes the resource allocation on the uplink so as to mitigate the effects of reducing the transmit power. That is, the network allocates radio resources that require lower UL transmission power and hence constrain EMF exposure level (transmit power not exceeding the level suitable/pre-determined for the state when terminal proximity is high). The metric driving this would be "acceptable EMF exposure level" as opposed to spectral efficiency or quality of the radio channel.

For example, the allocated resource blocks could be those with low interference conditions in UL, or in a lower frequency band. In addition (S306), the network may reduce the resource allocation to use lower modulation (MCS) levels that would require net lower UL transmit power per successfully delivered bit. In this case a longer resource block may be necessary. A further possibility is to constrain data transfer rate to constrain the max EMF level.

As a variation of this embodiment, a terminal for which the UL transmit power has been constrained to limit the EMF exposure levels when the terminal is in close-proximity to the user, can inform its status to the base station. In turn the base station can allocate, to this terminal, UL resources that experience lower interference. For example, it is possible to rank or group the UEs with low transmit power status (due to EMF constraints) and subsequently allocate radio resources experiencing low interference in UL to such UEs.

The adjacent cells can benefit from coordinating the low-interference resource allocations for these devices, as indicated by S308 in Figure 8. Such coordination can take place over the X2 and S1 interfaces shown in Figure 5. It should be noted that the steps in Figure 8 may be performed together or in any order, and need not all be performed.

Various modifications are possible within the scope of the present invention.

Actions referred to above as performed at the terminal or by the network are only described in these terms for the purposes of illustration. In principle, any part of a method embodying the present invention may be carried out either by the terminal or by the network or in an arbitrary combination thereof.

As already mentioned, for some users, EMF exposure may not be considered an issue whilst for others it may be considered very important. Therefore, embodiments of the present invention may be applied only to terminals for which a corresponding EMF exposure limiting function has been switched on by the user. This may be achieved by means of a "User Profile" stored in the terminal. Alternatively the User Profile may define one of a number of predetermined levels of sensitivity to EMF exposure.

The assessment of EMF level may be continuous, or more preferably (to avoid unnecessary processing), made periodically, such as once per frame (frames being time units of operation in LTE), or on an ad-hoc basis for example in response to the a request from the network.

Whilst the above embodiments have been described with respect to LTE, this is only an example. Embodiments of the present invention may be applied to a wide range of wireless communication networks.

To summarise, embodiments of the present invention provide a way of allocating radio resources to a mobile terminal, based on the estimated EMF levels this allocation incurs, its estimated impact on the user (i.e. the change in user EMF exposure), and the resulting QoS. An algorithm is proposed which a) uses EMF as one of the metrics for transmit power control; and b) estimates the impact of those EMF levels on the user (in other words, proposes models for EMF exposure). The former is carried out by trading off terminal battery life against QoS while reducing the user EMF exposure when deciding on the UL transmit power levels, while the latter is based on estimates of terminal proximity to the user, terminal location, as well as user preference in the form of a 'User Profile'.

Industrial Applicability

UL transmissions from close proximity mobile terminal and other wireless devices are a dominant source of EMF exposure levels to human body. The invention constrains the UL transmission power based on the terminal's proximity to the user, thus limiting the EMF exposure level. At the same time the invention maximised the UL signal quality by reconfiguring the radio resource parameters and allocations. Consequently, the invention enables active involvement of users in managing EMF exposure arising from UL transmissions from mobile terminal.

**Claims**

1. A wireless communication method in which a terminal (10) conducts wireless communication having a quality of service, QoS, with a network, the method comprising steps of:

   generating an indication related to EMF exposure of a user of the terminal (10); and controlling uplink power of the terminal (10) on the basis of the QoS and said indication wherein the controlling comprises optimising a cost function which combines at least QoS, an indication of the proximity of the terminal with respect to the user, and the uplink power of the terminal.

2. The method according to claim 1 wherein said indication is generated by the terminal (10) and transmitted to the network, and the controlling uplink power comprises the network transmitting an instruction for power control to the terminal.

3. The method according to claim 1 wherein said indication is generated by the terminal (10) and used by the terminal to perform the uplink power control.

4. The method according to claim 1 wherein said indication is generated by the network.

5. The method according to any preceding claim wherein said indication includes an indication of any one or more of:

   proximity of the terminal (10) with respect to the user;
   proximity of other terminals with respect to the user;
   an EMF reading sensed directly;
   a time period related to EMF exposure;
   a user setting related to EMF exposure; and
   uplink power currently used by the terminal (10).

6. The method according to claim 5 wherein the proximity of the terminal (10) with respect to the user is determined based on at least one of:

   height, orientation or acceleration of the terminal (10);
   temperature of the terminal (10);
   height of the terminal (10);

software applications in use at the terminal (10); status of ancillary units of the terminal (10) such as microphone port, earphone port, camera, charger or Bluetooth; and

analysis of images captured by an imaging device of the terminal (10).

7. The method according to any preceding claim wherein the controlling step takes into account of the effect of changing the uplink power on at least one of:

EMF exposure of the user;
QoS provided to the terminal by the network;
power consumption of the terminal (10); and
EMF exposures of users of other terminals.

8. The method according to claim 6 wherein the controlling step further takes into account a user profile.

9. The method according to claim 6 wherein the controlling step increases the uplink power in order to raise the QoS if not constrained by the effect on EMF exposure of the user.

10. The method according to any preceding claim further comprising the network allocating uplink resources to the terminal (10), taking into account the uplink power determined in the controlling step, wherein if the uplink power of the terminal is constrained by EMF exposure, uplink resources subject to less interference are allocated to the terminal.

11. The method according to claim 10 wherein the allocating step further takes into account interference to other users, expected to be caused by allocating resources to the user.

12. A wireless communication system for providing wireless communication having a quality of service, QoS, the system comprising:

a terminal (10) arranged to transmit an indication related to EMF exposure of the user of the terminal; and
a base station (11) arranged to receive said indication related to EMF exposure and operable to control uplink power of the terminal (10) on the basis of the QoS and said indication, wherein said base station optimises a cost function which combines at least QoS, an indication of proximity of the terminal with respect to the user, and uplink power of the terminal.

**Patentansprüche**

1. Drahtloses Kommunikationsverfahren, bei welchem ein Endgerät (10) eine drahtlose Kommunikation einer Dienstqualität, Quality of Service, QoS, mit einem Netzwerk durchführt, wobei das Verfahren die Schritte umfasst:

Erzeugen einer Anzeige, die sich auf eine EMF-Aussetzung eines Benutzers des Endgeräts (10) bezieht; und
Steuern der Uplink-Leistung des Endgeräts (10) auf der Grundlage der QoS und der Anzeige, wobei das Steuern Optimieren einer Kostenfunktion umfasst, welche wenigstens die QoS, eine Anzeige der Nähe des Endgeräts zu dem Benutzer und die Uplink-Leistung des Endgeräts kombiniert.

2. Verfahren nach Anspruch 1, wobei die Anzeige durch das Endgerät (10) erzeugt und an das Netzwerk gesendet wird und das Steuern der Uplink-Leistung umfasst, dass das Netzwerk einen Befehl zur Leistungssteuerung an das Endgerät sendet.

3. Verfahren nach Anspruch 1, wobei die Anzeige durch das Endgerät (10) erzeugt und von dem Endgerät verwendet wird, um die Uplink-Leistungssteuerung durchzuführen.

4. Verfahren nach Anspruch 1, wobei die Anzeige durch das Netzwerk erzeugt wird.

5. Verfahren nach einem der vorhergehenden Ansprüche, wobei die Anzeige eine Anzeige von ein oder mehrerem aus Folgendem umfasst:

Nähe des Endgeräts (10) zu dem Benutzer;
Nähe anderer Endgeräte zu dem Benutzer;
einer direkt erfassten EMF-Ablesung;
einer Zeitperiode in Bezug auf die EMF-Aussetzung;
einer Benutzereinstellung in Bezug auf die EMF-Aussetzung und
Uplink-Leistung, die aktuell vom Endgerät (10) genutzt wird.

6. Verfahren nach Anspruch 5, wobei die Nähe des Endgeräts (10) zu dem Benutzer bestimmt wird auf der Grundlage von mindestens einem aus:

Höhe, Orientierung oder Beschleunigung des Endgeräts (10);
Temperatur des Endgeräts (10);
Höhe des Endgeräts (10);
Software-Anwendungen in Verwendung an dem Endgerät (10);
Status von Hilfseinheiten des Endgeräts (10), z.B. Mikrofonanschluss, Kopfhöreranschluss, Kamera, Ladegerät oder Bluetooth; und
Analyse von Bildern, die von einer Kameraeinheit des Endgeräts (10) aufgenommen werden.

**7.** Verfahren nach einem der vorhergehenden Ansprüche, wobei in dem Steuerschritt die Auswirkung des Änderns der Uplink-Leistung auf mindestens eines aus Folgendem berücksichtigt wird:

> EMF-Aussetzung des Benutzers;
> QoS, die dem Endgerät durch das Netzwerk bereitgestellt wird;
> Stromverbrauch des Endgeräts (10) und
> EMF-Aussetzungen von Benutzern anderer Endgeräte.

**8.** Verfahren nach Anspruch 6, wobei in dem Steuerschritt ferner ein Benutzerprofil berücksichtigt wird.

**9.** Verfahren nach Anspruch 6, wobei in dem Steuerschritt die Uplink-Leistung erhöht wird, um die QoS zu steigern, falls nicht durch die Auswirkung auf die EMF-Aussetzung des Benutzers beschränkt.

**10.** Verfahren nach einem der vorhergehenden Ansprüche, ferner umfassend, dass das Netzwerk dem Endgerät (10) Uplink-Ressourcen zuweist, wobei die in dem Steuerschritt bestimmte Uplink-Leistung berücksichtigt wird, wobei, wenn die Uplink-Leistung des Endgeräts durch die EMF-Aussetzung beschränkt ist, dem Endgerät Uplink-Ressourcen zugewiesen werden, die weniger Störungen ausgesetzt sind.

**11.** Verfahren nach Anspruch 10, wobei in dem Zuweisungsschritt ferner Störungen für andere Benutzer berücksichtigt werden, von denen erwartet wird, dass sie durch Zuweisen von Ressourcen an den Benutzer bewirkt werden.

**12.** Drahtloses Kommunikationssystem zum Bereitstellen von drahtloser Kommunikation mit einer Dienstqualität, QoS, wobei das System umfasst:

> ein Endgerät (10), welches so eingerichtet ist, dass es eine Anzeige in Bezug auf eine EMF-Aussetzung des Benutzers des Endgeräts sendet; und
> eine Basisstation (11), welche so eingerichtet ist, dass sie die Anzeige in Bezug auf die EMF-Aussetzung empfängt, und so zu betreiben ist, dass sie eine Uplink-Leistung des Endgeräts (10) auf der Grundlage der QoS und der Anzeige steuert, wobei die Basisstation eine Kostenfunktion optimiert, welche wenigstens die QoS, eine Anzeige der Nähe des Endgeräts zu dem Benutzer und die Uplink-Leistung des Endgeräts kombiniert.

**Revendications**

**1.** Procédé de communication sans fil dans lequel un terminal (10) mène une communication sans fil ayant une qualité de service, QoS, avec un réseau, le procédé comprenant les étapes consistant à :

> générer une indication liée à l'exposition EMF d'un utilisateur du terminal (10) ; et
> commander la puissance de liaison montante du terminal (10) sur la base de la QoS et ladite indication, dans lequel la commande comprend l'optimisation d'une fonction de coût qui combine au moins la QoS, une indication de la proximité du terminal par rapport à l'utilisateur, et la puissance de liaison montante Du terminal.

**2.** Procédé selon la revendication 1, dans lequel ladite indication est générée par le terminal (10) et transmise au réseau, et la commande de puissance de liaison montante comprend le réseau transmettant une instruction de commande de puissance au terminal (10).

**3.** Procédé selon la revendication 1, dans lequel ladite indication est générée par le terminal (10) et utilisée par le terminal pour effectuer la commande de puissance de liaison montante.

**4.** Procédé selon la revendication 1, dans lequel ladite indication est générée par le réseau.

**5.** Procédé selon l'une quelconque des revendications précédentes, dans lequel ladite indication comprend une indication d'un ou plusieurs parme :

> la proximité du terminal (10) par rapport à l'utilisateur ;
> la proximité d'autres terminaux (10) par rapport à l'utilisateur ;
> une lecture EMF détectée directement ;
> une période de temps liée à l'exposition EMF ;
> un paramètre d'utilisateur lié à l'exposition EMF ; et
> la puissance de liaison montante en cours d'utilisation par le terminal (10).

**6.** Procédé selon la revendication 5, dans lequel la proximité du terminal (10) par rapport à l'utilisateur est déterminée sur la base d'au moins un parmi :

> la hauteur, l'orientation ou l'accélération du terminal (10) ;
> la température du terminal (10) ;
> la hauteur du terminal (10) ;
> des applications logicielles utilisées au niveau du terminal (10) ;
> un état d'unités auxiliaires du terminal comme le port du microphone, le port de l'écouteur, l'appareil photo, le chargeur ou le Bluetooth ; et l'analyse d'images capturées par un dispositif d'imagerie du terminal (10).

7. Procédé selon l'une quelconque des revendications précédentes, dans lequel l'étape de commande prend en compte l'effet du changement de la puissance de liaison montante sur au moins une parmi :

l'exposition EMF de l'utilisateur ;
la QoS fournie au terminal par le réseau ;
la consommation électrique du terminal (10) ; et
les expositions EMF d'utilisateurs d'autres terminaux.

8. Procédé selon la revendication 6, dans lequel l'étape de commande prend en outre en compte un profil d'utilisateur.

9. Procédé selon la revendication 6, dans lequel l'étape de commande augmente la puissance de liaison montante pour augmenter la QoS en l'absence de contrainte par l'effet sur l'exposition EMF de l'utilisateur.

10. Procédé selon l'une quelconque des revendications précédentes, comprenant en outre le réseau allouant des ressources de liaison montante au terminal (10), en prenant en compte la puissance de liaison montante déterminée dans l'étape de commande, dans lequel, si la puissance de liaison montante du terminal est contrainte par l'exposition EMF, des ressources de liaison montante soumises à des interférences moindres sont allouées au terminal.

11. Procédé selon la revendication 10, dans lequel l'étape d'allocation prend en compte en outre l'interférence avec d'autres utilisateurs, supposée être causée par l'allocation de ressources à l'utilisateur.

12. Système de communication sans fil pour fournir une communication sans fil ayant une qualité de service, QoS, le système comprenant :

un terminal (10) agencé pour transmettre une indication liée à l'exposition EMF de l'utilisateur du terminal ; et
une station de base (11) agencée pour recevoir ladite indication liée à l'exposition aux EMF et pouvant fonctionner pour commander la puissance de liaison montante du terminal (10) sur la base de la QoS et de ladite indication, dans lequel ladite station de base optimise une fonction de coût qui combine au moins la QoS , une indication de proximité du terminal par rapport à l'utilisateur, et la puissance de liaison montante du terminal.

FIG. 1

FIG. 2

UE    10          eNB    11

Measuring
received power

Estimating
path loss

Calculating
transmission
power

Decide
Transmission
power

Transmit

Transmit

Send TPC
commands

Measuring
received SINR

FIG. 3

| QCI | Bearer | Priority | Delay | PELR | Examples |
|-----|--------|----------|-------|------|----------|
| 1 | GBR | 2 | 100 ms | $10^{-2}$ | Conversational voice |
| 2 | | 4 | 150 ms | $10^{-3}$ | Conversational video |
| 3 | | 3 | 50 ms | $10^{-3}$ | Real-time games |
| 4 | | 5 | 300 ms | $10^{-6}$ | Streaming video |
| 5 | Non-GBR | 1 | 100 ms | $10^{-6}$ | IMS signalling |
| 6 | | 6 | 300 ms | $10^{-6}$ | Streaming video, web, EMail |
| 7 | | 7 | 100 ms | $10^{-3}$ | Voice, video, games |
| 8 | | 8 | 300 ms | $10^{-6}$ | Streaming video, web, EMail |
| 9 | | 9 | | | |

## FIG. 4

S-GW / MME 21/22

## FIG. 5

Terminal assesses EMF exposure of User ⟋S102

Terminal transmits indication relating to EMF Exposure ⟋S104

Terminal Receives TPC command ⟋S106

Terminal Adjusts Transmit Power ⟋S108

## FIG. 6

Network receives indication(s) relating to EMF Exposure ⟋S202

Network collects other required information ⟋S204

Network optimises Cost Function ⟋S206

Network determines UL transmit power of terminal ⟋S208

Network transmits TPC command ⟋S210

## FIG. 7

Network determines UL transmit power not to exceed predetermined level ⟋S302

Network allocates low-interference UL resources to terminal ⟋S304

Network adjusts MCS used by terminal ⟋S306

Coordination with other cells ⟋S308

## FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2410661 A1